# EUROPEAN PATENT APPLICATION

(11) **EP 4 571 260 A1**
(43) Date of publication of application: **18.06.2025**
(21) Application number: 23307203.2
(22) Date of filing: 14.12.2023
(51) Int. Cl.: G01C 23/00

(54) **PROVISION OF AIRCRAFT CREW INDICATIONS VIA HEAD WORN DISPLAY**

(71) Applicant: Rockwell Collins France SAS, 31701 Blagnac (FR)
(72) Inventor: SALMON, Philippe, 31770 Colomiers (FR); FAGUET, Pierre, 31200 Toulouse (FR); BITAR, Elias, 31170 Tournefeuille (FR)
(74) Representative: Dehns

(57) **Abstract**

A method of providing information to a person in an aircraft, comprising obtaining information from an environment external to the aircraft and providing a display on a head worn display device worn by the person, the display depicting the obtained information superimposed on a real image viewed through the display.

## Description

### TECHNICAL FIELD

The present disclosure is concerned with providing information or indications to a pilot or other person in an aircraft via a head worn display such as virtual glasses superimposed onto a real image viewed through the display.

### BACKGROUND

Pilots of aircraft, including airplanes and helicopters, and aircraft crew use on-board or cockpit display equipment in combination with real images observed with the naked eye through a window of the aircraft for navigation, landing, identification of objects or obstacles, analysis of terrain etc. to ensure safe flight and for use in various missions e.g. search and rescue missions. Whilst on-board display equipment, including radar equipment, is very advanced, reliable and accurate, there are certain situations where the pilot has to make judgements based on real images viewed by their own eyes. These judgements require a great deal of attention and focus, as well as clear visibility, and also require the pilot to compensate for different perspectives and distances relative to the objects/terrain they are seeing. This can mean that a pilot misjudges the size or distance/location of what they are viewing and/or overcompensates for the fact that they may not have made a precise observational judgement.

In recent years, head worn displays have become available in a range of applications, e.g. in virtual gaming applications, or in medical procedures, whereby virtual images can be represented to the user on the head worn display. In some such head worn displays, the user can see through the display to the real world beyond the display (i.e. the display is a transmission-type display) but a virtual image from other sensors, processors, cameras or the like can be generated and sent to the display and be superimposed over the real image viewed through the display. Although head worn displays have found use in some military applications, there has not been use of such displays by aircraft pilots.

### SUMMARY

According to the present disclosure, methods and devices are provided for providing information to a person in an aircraft via a head worn display.

There is provided a method of providing information to a person in an aircraft, comprising obtaining information from an environment external to the aircraft and providing a display on a head worn display device worn by the person, the display depicting the obtained information superimposed on a real image viewed through the display.

In one example, the method comprises generating a marker indicative of a size of an area of ground in the external environment within which the aircraft can land, the display comprising the marker, and wherein the real image is an image of terrain below the aircraft; whereby the marker is superimposed over the terrain.

In another example, the marker represents a point of interest in the external environment, such as a person or object being searched.

In another example, the information defines speed and trajectory to arrive at a predetermined flight position, e.g. a hover position.

In another example, the information defines terrain features such as mountain ridges and/or valleys, and the display displays a highlighted zone incorporating the terrain features.

### BRIEF DESCRIPTION

Examples of methods according to this disclosure will now be described with reference to the drawings. It should be noted that these are examples only and variations are possible within the scope of the claims.
Figure 1 is provided to explain an example of a first method according to the disclosure.
Figure 2 shows a modified version of Figure 1.
Figure 3 is provided to explain an example of a second method according to the disclosure.
Figure 4 shows another display view according to the method of Figure 3.
Figure 5 shows another display view according to the method of Figures 3 and 4.
Figure 6 shows a display provided according to a third method according to the disclosure.
Figure 7 shows an alternative view of the display of Fig. 6.
Figure 8 shows an alternative view of the display of Fig. 6.
Figure 9 shows an alternative view of the display of Fig. 6.
Figure 10 is provided to explain a fourth method according to the disclosure.
Figure 11 shows a display according to the fourth method.

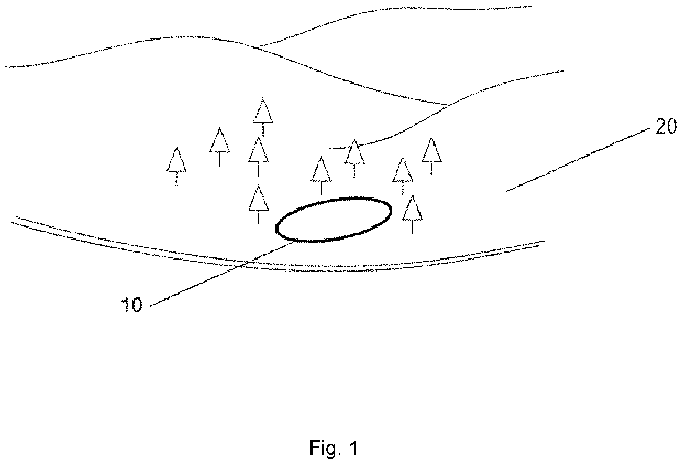

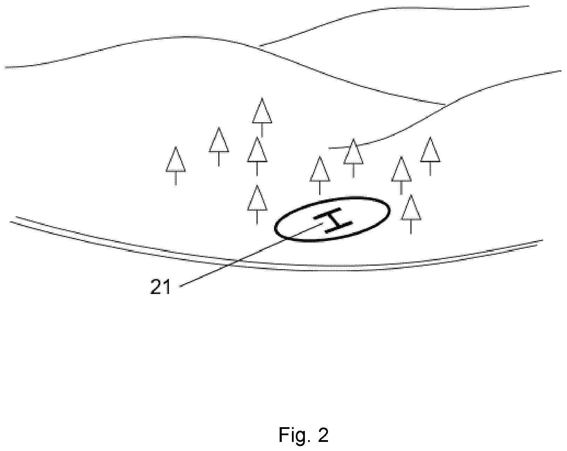

With reference to Figures 1 and 2, the head worn display may be used by a pilot or other person in the aircraft (hereinafter we will refer to a pilot, but it should be noted that such references may apply to other persons in an aircraft) to identify a suitable landing place e.g. when a landing placed needs to be identified during an emergency or unscheduled landing in an unplanned area. In such circumstances, the pilot does not already have information as to where a landing place e.g. an airport or a helicopter landing pad, is located and must identify a place that is of sufficient size and clearance to land the aircraft. Conventionally, in such situations, the pilot needs to look down on the area below and try to estimate the size of a clear area and estimate the size of area the aircraft needs to safely land (e.g. for a helicopter, based on the size of the rotor). For safety, a pilot would usually, for example, try to identify a clear area, free of obstacles such as building, trees, etc. that has a diameter approximately twice the diameter of the helicopter rotor. To allow for inaccuracies, however, pilots tend to estimate the area with a significant safety margin, which may mean that they reject areas that would, in fact, be suitable. Once an area is identified, the pilot would then navigate to land in that area.

Using a method according to this disclosure, and a head worn display, the pilot can better identify and navigate to a safe landing space.

The head worn display generates, on the display, a marker that represents an area of the size within which the aircraft can land e.g. a circle representing the diameter of a safe landing area. The marker may be generated in response to a command input to the display by the pilot either directly or via an external device such as a flight control inceptor that communicates the command to the device. Alternatively, the marker may be generated whenever the display is on. As before, the size of the circle may e.g. represent an area having twice the diameter of the helicopter rotor. The marker is formed on the display in view of the wearer (the pilot), at the intersection of the pilot's gaze direction and the ground, and so is superimposed on the real image of the terrain below the aircraft that the user can see through the display. The pilot is then able to move the marker relative to the terrain, until the marker corresponds to/lies over a clear area of the real image - e.g. such that all of the real image of the terrain lies within the circle (or other shape) of the marker. The marker thus identifies, to the pilot, a suitable place to land, and the pilot can navigate to that place.

The marker may correspond to a defined size in the real world at ground level. The display can be configured such that the size of the marker changes according to the distance between the aircraft (or the display) and the ground. Thus, if the aircraft is at a greater distance from the ground, the marker will define a smaller area than when the aircraft is closer to the ground.

In one example, the display is configured such that once the pilot has identified a clear area within the bounds of the display marker, the pilot is able to save the location e.g. by pressing a button or key on the display or other device connected to the display (e.g. a control stick of the aircraft) that sends a signal to the display to store the overlapping image. The pilot (or even the aircraft flight control system) can then use the information from the superimposed image to manage flight of the aircraft to land in the identified area.

Figure 1 shows an example of a display according to this method where the marker (here a circle) 10 which is displayed on the head worn display, is superimposed over the real image 20 of the terrain.

Additional information may also be provided on or in combination with the displayed marker such as, as shown in Fig. 2, an H symbol 21 to represent a helicopter landing pad and/or wind direction, or other useful information.

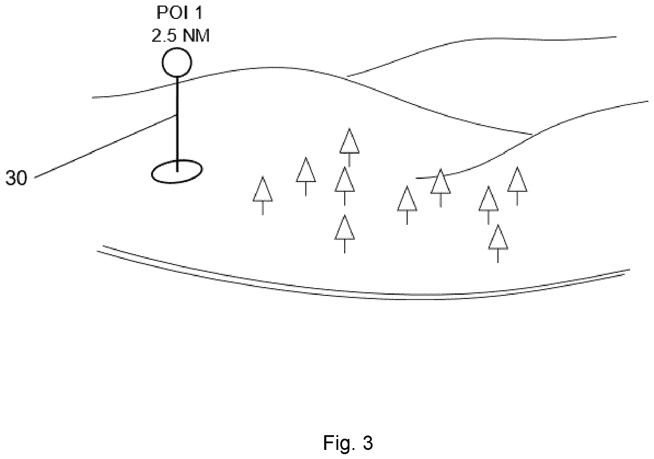

Another method of providing information to the pilot via a head worn display will be described with reference to Figs. 3 to 5. In this example, rather than identifying a safe place to land, the method is aimed at identifying a point of interest at a location outside of the aircraft on the head worn display. The point of interest can be saved by a command from the user e.g. by pressing a button or the like, as above, and, in some examples, can then be communicated to or shared with other users wearing head worn displays. The other users may be e.g. other crew members of the aircraft or crew of other aircraft.

An application of this method is e.g. in a search and rescue mission, searching for a person or object in the terrain or in the sea etc. below the aircraft. Conventionally, the only way to inform others e.g. other members of the crew or others in other aircraft forming part of a search mission, etc. would be by voice communication to share the information. Unclear communication or miscommunications, or several voices providing different information at overlapping times, etc. can cause confusion and misidentification of sought objects/persons. Using the method of this disclosure and the head worn display, a person in an aircraft can view an area below the aircraft and if an object, e.g. a castaway or other person or object, is seen, they are able to create, on the head worn display, superimposed over the real image viewed through the display, a 'point of interest' (POI) by looking at the object. The POI may be defined as an image point or marker and/or can be defined in the form of geolocational or positional data. Fig. 3 shows an example of an identified POI 30.

The POI can be stored with information such as information identifying the source of the information, a time stamp and distance information (from the source or some other point to the POI).

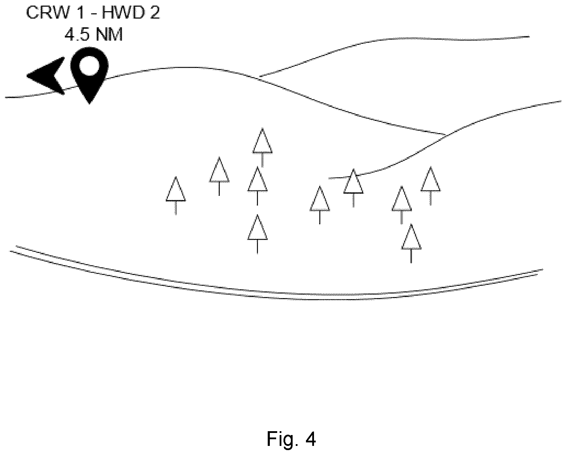

The POI information can then be transmitted to other users that are users of the system e.g. registered to the same system. As a geolocation is fixed in space, if this information is transmitted, users receiving the information can determine the distance of the POI from their own position. The time stamp and distance information may be useful to other users as they can then calculate the position of the POI in relation to themselves based on that information and can also modify the calculations based on knowledge that e.g. the object might have moved since the POI was first generated. The allows for a more precise identification of the POI by users receiving the POI information from the first, transmitting, user, especially if they are not in the same aircraft, and who are at a different location relative to the POI compared to the source of the POI. Fig. 4 shows an example of a receiving user's display showing the POI from the transmitting or source user. In the example of Fig. 3, the receiving user may be another member of crew of the same aircraft as the transmitting user.

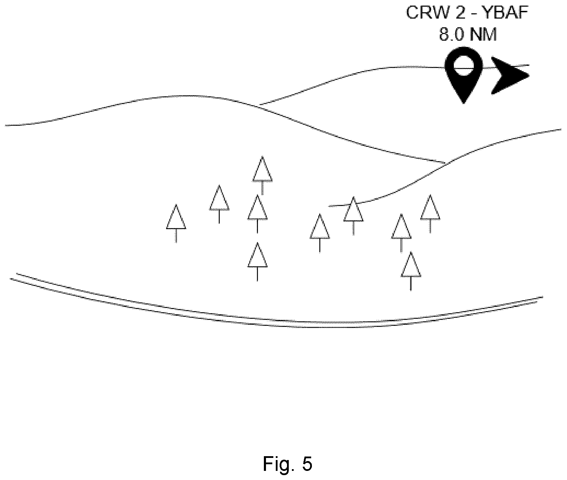

The POI may, as mentioned above, also be sent to other aircraft or e.g. ships, and the display of such receivers may be such as shown in Fig. 5 representing that the POI is much further away from the receiving user than the transmitting user.

If the POI is not in the field of view of a receiving user, the information can be processed or supplemented with direction cues to enable the receiving user to change their direction of gaze to include the POI.

If sufficient bandwidth is available, it is also possible to record and broadcast to the receivers a video recording of the POI. The information representing the POI may also be sent to digital maps.

This application of the disclosure allows crew members of the same or different aircraft and other locations to quickly share precise geolocated information to allow teams to operate in conjunction.

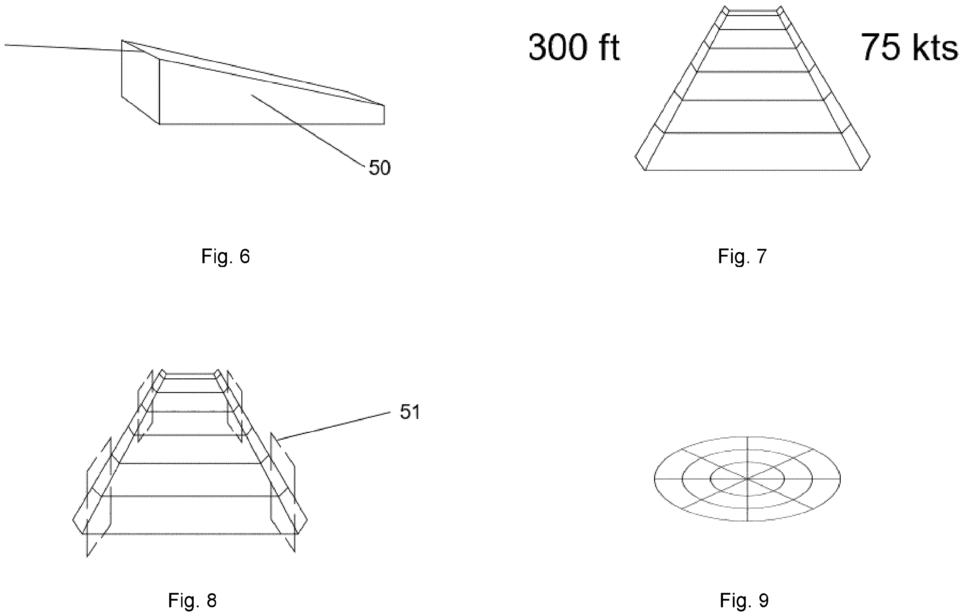

A further method according to the disclosure will now be described with reference to Figs. 6 to 9.

Here, the user is provided, via the head worn display, with information relating to speed and trajectory e.g. when moving to a hover state. Here, a ramp 50 is modelled and displayed to the user on the head worn display, superimposed over the actual ground image (see Fig. 6). This enables the pilot to judge the adequacy of speed with the trajectory. The ramp symbology 50 is used to guide the pilot and includes deceleration information displayed on lateral information. The pilot uses the ramp 50 image to steer the descent speed and altitude information (Fig. 7) relative to the three-degree descent gradient. Fig. 8 shows the speed alignment feature to keep speed and trajectory aligned. This method provides a line in order to align with the entry of the ramp and also indicates altitude and speed to enter the ramp. The display assists the pilot in managing deceleration when descending to a hover. In more detail, the ramp symbology 50 is first (Fig. 6) used by the pilot to reach the alignment towards the hover position, according to wind constraints (Fig. 7). Then, the pilot uses the ramp 50 image to monitor the altitude information along the three-degree descent gradient and the speed, thanks to lateral cues 51 that move at the preferred slowing speed down to zero at the hover location (Fig. 8). When arrived at the bottom of the ramp, further symbology (e.g. the 'spider's web' symbol as seen in Fig. 9) is depicted to help the pilot position at the hover location.

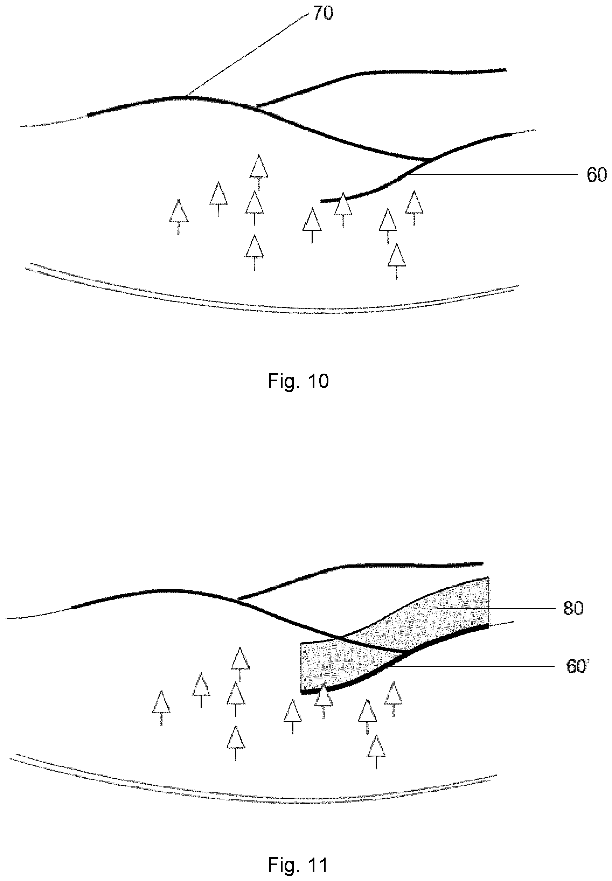

A further method according to the disclosure, using a head worn display to provide information to a pilot will be described with reference to Figs. 10 and 11. Using this method, the safety of flight in rough or mountainous terrain, where high and cross winds can develop and affect flight conditions, is improved. During flight in such areas, it is often difficult to judge where terrain heights change e.g. where mountain ridges and valleys are. It is, however, important to be aware of such height changes because the wind acting on the aircraft will change accordingly. The method described herein aims to improve a pilot's appreciation of the distance to different parts of the terrain e.g. to a ridgeline and so be able to anticipate changes in flight conditions.

Fig. 10 shows how ridgelines are conventionally seen on an on-board cockpit navigation display. Lines 60, 70 mark terrain features such as mountain ridges. It is, however, left to the pilot to anticipate the effect of these ridges and calculate a safe flight height or path. According to the present method, a representation is provided, e.g. as seen in Fig. 11, to the head worn display that, based on the defined terrain features, calculates a zone where, depicted by a highlighted band 80 on the display, superimposed over the real terrain image seen by the pilot through the display, to indicate to the pilot that this zone should be avoided. As the pilot approaches a feature e.g. the first ridgeline 60', this feature is depicted in an enhanced manner e.g. as a thicker and/or brighter line or in a different colour, and the band 80 may also become brighter or change colour to identify a caution area. This way, the pilot is better able to anticipate and avoid or adjust for negative flight conditions.

As can be appreciated from the methods described above, there are considerable safety and other advantages in being able to provide a person in an aircraft with information on a situation outside of the aircraft via a head worn display.

## Claims

1. A method of providing information to a person in an aircraft, comprising obtaining information from an environment external to the aircraft and providing a display on a head worn display device worn by the person, the display depicting the obtained information superimposed on a real image viewed through the display.

2. The method of claim 1, comprising generating a marker indicative of a size of an area of ground in the external environment within which the aircraft can land, the display comprising the marker, and wherein the real image is an image of terrain below the aircraft; whereby the marker is superimposed over the terrain.

3. The method of claim 2, comprising moving the marker relative to the terrain to locate a clear landing area in the terrain.

4. The method of claim 3, further comprising selecting the position of the marker associated with the clear landing area and providing navigation directions to the pilot to steer to the clear landing area, and optionally further comprising providing additional information on the display associated with the marker.

5. The method of any of claims 2 to 4, wherein the marker is a circle with a diameter corresponding to the size of the area of ground.

6. The method of any of claims 2 to 5, comprising generating the marker in response to pilot input or in response to operation of the display.

7. The method of claim 1, wherein the information is information identifying a point of interest in the external environment.

8. The method of claim 7, wherein the point of interest is a person or object being searched.

9. The method of claim 7 or 8, further comprising saving the information and, optionally, transmitting the information to other devices.

10. The method of claim 7, 8 or 9, wherein the information is defined as geolocational or positional data and, optionally, wherein the information is saved with other information relative to the point of interest.

11. The method of claim 1, wherein the information defines speed and trajectory to arrive at a predetermined flight position, and optionally wherein the information includes real-time cues to enable the person to maintain, accelerate or decelerate the speed to reach a predefined speed at the predetermined flight position.

12. The method of claim 11, wherein the information is displayed in the form of a ramp (50).

13. The method of claim 1, wherein the information defines terrain features and wherein the display displays a highlighted zone incorporating the terrain features, and optionally wherein the highlighted zone indicates a zone in space that the aircraft should avoid.

14. The method of claim 13, wherein the terrain features are mountain ridges and/or valleys.

15. A display apparatus for a person in an aircraft including a head worn display and configured to perform the method of any preceding claim.
